# FASCICULE DE BREVET EUROPEEN

(11) **EP 0 760 475 B1**
(45) Date de publication et mention de la délivrance du brevet: **03.12.2003**
(21) Numéro de dépôt: 96401670.3
(22) Date de dépôt: 25.07.1996
(51) Int. Cl.: G01N 21/21

(54) **Ellipsomètre multi-détecteurs et procédé de mesure ellipsométrique multi-détecteurs**
Verfahren und Vorrichtung zur Ellipsometrie mit Vielfachdetektoren
Device and method for ellipsometry with multiple detectors

(30) Priorité: 03.08.1995 FR 9509478
(43) Date de publication de la demande: 05.03.1997
(73) Titulaire: CENTRE NATIONAL DE LA RECHERCHE SCIENTIFIQUE, 75016 Paris Cédex (FR)
(72) Inventeur: Drevillon, Bernard, 92190 Meudon (FR); Parey, Jean-Yves, 91620 La Ville du Bois (FR)
(74) Mandataire: Michelet, Alain

(56) Documents cités:
- EP-A- 0 663 590
- PROGRESS IN CRYSTAL GROWTH AND CHARACTERIZATION OF MATERIALS, 1993, UK, vol. 27, no. 1, ISSN 0146-3535, pages 1-87, XP000579689 DREVILLON B: "Phase modulated ellipsometry from the ultraviolet to the infrared: in situ application to the growth of semiconductors"
- REVIEW OF SCIENTIFIC INSTRUMENTS, vol. 64, no. 8, 1 Août 1993, pages 2153-2159, XP000393875 CANILLAS A ET AL: "PHASE-MODULATED ELLIPSOMETER USING A FOURIER TRANSFORM INFRARED SPECTROMETER FOR REAL TIME APPLICATIONS"
- THIN SOLID FILMS, vol. 234, no. 1/02, 25 Octobre 1993, pages 318-322, XP000397453 CANILLAS A ET AL: "AN IR PHASE-MODULATED ELLIPSOMETER USING A FOURIER TRANSFORM SPECTROMETER FOR IN SITU APPLICATIONS"

## Description

La présente invention concerne un ellipsomètre multi-détecteurs et un procédé de mesure ellipsométrique multi-détecteurs.

L'ellipsométrie est une technique de mesure non destructive permettant la caractérisation optique d'un échantillon disposant d'une surface spéculaire ou quasi-spéculaire.

Cette mesure est généralement effectuée en incidence oblique, mais peut aussi être faite en incidence normale, l'ellipsométrie étant alors appelée Réflexion Anisotrope Spectroscopique (RAS, Reflexion Anisotropy Spectroscopy) ou Réflectance Différentielle Spectroscopique (RDS, Reflectance Difference Spectroscopy).

L'ellipsométrie peut être également étendue à des surfaces rugueuses ou à la diffusion de la lumière par des particules d'un système physique.

De façon générale, elle repose sur la détermination de la matrice de Mueller de l'échantillon ou du système physique.

L'ellipsométrie peut être mise en oeuvre in situ et permet alors l'étude des mécanismes de croissance des couches minces, de formation des interfaces et le contrôle de procédés d'élaboration de ces couches et interfaces. L'ellipsométrie est, par exemple, utilisée pour l'étude et le contrôle de la fabrication des semi-conducteurs.

Les mesures ellipsométriques peuvent être réalisées à une longueur d'onde fixe, ou à plusieurs longueurs d'onde (ellipsométrie spectroscopique). Selon le domaine de longueur d'onde de la source: proche ultraviolet, visible, proche infrarouge, infrarouge, etc., il est possible d'accéder à des propriétés différentes des couches, des matériaux ou d'explorer des matériaux différents.

Dans le domaine de l'ultraviolet et du visible, la profondeur de pénétration du rayonnement est souvent faible. Cela constitue des conditions favorables pour l'étude des surfaces et des interfaces, et pour les contrôles en temps réel. Cela ne permet généralement pas d'accéder aux propriétés volumiques des couches et des matériaux qui peuvent, au contraire, être obtenues par des mesures dans le domaine de l'infrarouge. L'infrarouge est bien adapté aux mesures d'absorption vibrationnelles (liaisons chimiques).

Pour la réalisation des mesures ellipsométriques, la surface d'un échantillon est éclairée par un faisceau lumineux et l'état de polarisation d'un faisceau incident est comparé à celui du faisceau réfléchi ou transmis. On désignera par faisceau renvoyé le faisceau réfléchi ou transmis par l'échantillon.

Les mesures ellipsométriques peuvent être effectuées en présence d'une excitation extérieure alternative, par exemple de type optique, électrique ou magnétique, la technique correspondante étant respectivement appelée photo-ellipsométrie, électro-ellipsométrie et magnéto-ellipsométrie.

L'état de polarisation du faisceau renvoyé dépend à la fois de propriétés de l'échantillon, de l'angle d'incidence du faisceau incident, et de la longueur d'onde de mesure. La relation entre cet état de polarisation et ces paramètres est donnée par les équations de Fresnel citées, par exemple, par D. CHARLOT et A. MARUANI dans Appl. Opt. 24, 3368, 1985.

Dans un ellipsomètre à modulation de phase, un rayon incident a sa polarisation modulée par une différence de phase générée entre deux axes propres d'un modulateur de phase. Le déphasage évolue typiquement avec le temps t selon une loi périodique de fréquence de modulation Fm, ce déphasage étant proportionnel au premier ordre à sin (2 π Fm t). Dans un ellipsomètre à modulation de phase, l'intensité d'un flux d'un faisceau lumineux réfléchi par un échantillon permet de déduire, de façon connue, les modifications de l'état de polarisation du faisceau lumineux.

L'ellipsométrie, et plus particulièrement l'ellipsométrie spectroscopique à modulation de phase (ESMP), est une technique performante pour mesurer en temps réel la croissance de couches sur un substrat. Cette technique présente l'avantage de ne pas perturber des réactions en cours. Elle est par ailleurs très sensible à des paramètres physiques de l'échantillon mesuré, tels qu'une épaisseur de couche et un indice de réfraction. D'autre part, elle permet des mesures rapides.

Selon la technique classique, un ellipsomètre spectroscopique à modulation de phase comporte un unique photodétecteur, mesurant un flux lumineux réfléchi par un échantillon. L'enregistrement d'un spectre nécessite alors le balayage d'un système dispersif, tel qu'un prisme ou un réseau, pendant des temps pouvant atteindre plusieurs dizaines de secondes. Cet ellipsomètre est donc peu adapté à des mesures en temps réel de phénomènes rapidement évolutifs.

Pour accélérer l'acquisition de mesures, il a été proposé un ellipsomètre comportant, en plus d'une unité de traitement électronique, un spectrographe et plusieurs photodétecteurs. On en trouvera une illustration avec 4 photodétecteurs par B. DREVILLON dans "Progress in Crystal Growth and Characterization of Materials", vol. 27, num. 1, pp. 1-87, 1993 (pages 14 et 15). Les photodétecteurs sont ajustés au spectrographe, de façon à mesurer des flux d'un faisceau lumineux réfléchi par un échantillon et décomposé par le spectrographe. Les photodétecteurs, reliés à l'unité de traitement électronique par des connexions ou voies d'entrée produisent dans les voies d'entrée des signaux mesurés, à partir desquels l'unité de traitement électronique calcule des paramètres physiques de l'échantillon. Pour ce faire, l'unité de traitement électronique est synchronisée avec le modulateur de phase et effectue des opérations associées successivement aux différentes voies d'entrée, selon des phases d'acquisition éventuellement de même durée. La durée des phases d'acquisition est un multiple de la période de modulation Tm, égale à l'inverse de la fréquence de modulation Fm. Pendant l'une quelconque des phases d'acquisition, l'unité de traitement électronique reçoit un signal mesuré provenant de l'une des voies d'entrée. Puis elle commute sur une autre voie d'entrée pour passer à la phase d'acquisition suivante. L'ellipsomètre fait ainsi appel à une technique d'acquisition dite en mode séquentiel.

Cet ellipsomètre multi-détecteurs permet d'exploiter plusieurs longueurs d'onde du faisceau lumineux réfléchi plus efficacement et plus rapidement qu'un ellipsomètre classique comprenant un unique photodétecteur. Cependant, ses possibilités restent sensiblement en deçà des besoins suscités par des mesures en temps réel.

En particulier, le mode séquentiel peut difficilement être étendu à un grand nombre de photodétecteurs, tel que plusieurs dizaines par exemple, à cause de la durée nécessaire au balayage de l'ensemble des voies d'entrée.

La présente invention vise un ellipsomètre spectroscopique multi-détecteurs à modulation de phase, permettant d'accélérer sensiblement des mesures en temps réel par rapport aux dispositifs existants.

Plus précisément, l'invention vise un ellipsomètre spectroscopique permettant l'acquisition quasi-simultanée d'un grand nombre de longueurs d'onde, cette acquisition réduisant considérablement la durée d'un cycle.

L'invention a également pour objectif un ellipsomètre multi-détecteurs permettant des acquisitions quasi-simultanées en plusieurs points d'un échantillon.

Elle a aussi pour objectif un ellipsomètre multi-détecteurs permettant des acquisitions quasi-simultanées pour plusieurs états de polarisation d'un faisceau lumineux diffusé par un échantillon.

Dans un cadre plus général, l'invention a pour but un ellipsomètre multi-détecteurs permettant la lecture en parallèle d'un grand nombre de photo-détecteurs.

L'invention a également pour objectif un procédé de mesure ellipsométrique multi-détecteurs rapide, et applicable à des mesures quasi-simultanées de plusieurs informations en temps réel.

A cet objet, l'invention concerne un ellipsomètre multi-détecteurs comportant:
- au moins une source lumineuse émettant au moins u faisceau lumineux incident,
- au moins un polariseur polarisant ce faisceau lumineu incident,
- au moins un modulateur de polarisation générant un modulation de polarisation à une fréquence de modulation Fm d faisceau lumineux de lumière polarisée,
- des moyens d'éclairage d'un échantillon par le faiscea lumineux incident produisant un faisceau lumineux renvoyé ayar un état de polarisation,
- au moins un analyseur analysant l'état de polarisatio du faisceau lumineux renvoyé,
- au moins deux photodétecteurs mesurant des flux d parties du faisceau lumineux renvoyé et produisant dans de voies d'entrée des signaux analogiques mesurés,
- au moins une unité de traitement électronique relié aux voies d'entrée, calculant des paramètres physiques d l'échantillon à partir des signaux analogiques mesurés.

Cette unité de traitement électronique comporte:
- au moins un ensemble de multiplexage et d numérisation, multiplexant et convertissant les signau analogiques mesurés en un signal numérique multiplexé l'ensemble de multiplexage et de numérisation commutar successivement sur les voies d'entrée à une fréquence d commutation,
- une unité de traitement numérique de signaux reliée l'ensemble de multiplexage et de numérisation, dissociant I signal numérique multiplexé en des composantes correspondar respectivement aux voies d'entrée et appliquant à ce composantes des transformées de Fourier discrètes pour e extraire des paramètres de Fourier correspondant à la fréquenc de modulation Fm et à ses multiples,
- une unité de calcul finale reliée à l'unité de traitement numérique de signaux, calculant les paramètres physiques à partir des paramètres de Fourier,
- un séquenceur relié à l'ensemble de multiplexage et de numérisation, et à l'unité de traitement numérique de signaux, ce séquenceur envoyant des signaux de synchronisation.

Selon l'invention, le séquenceur comporte des moyens permettant d'imposer à la fréquence de commutation Fe d'être un multiple de la fréquence de modulation Fm.

Dans les ellipsomètres multi-détecteurs connus, pour lesquels est pratiquée une acquisition en mode séquentiel, une commutation est effectuée à la fin de chaque phase d'acquisition. Etant donné que la durée Ta de la phase d'acquisition est un multiple de la période de modulation Tm, la fréquence de commutation Fe est un diviseur de la fréquence de modulation Fm. Par contraste, dans l'ellipsomètre selon l'invention, la fréquence de commutation Fe est un multiple de la fréquence de modulation Fm. Ainsi l'unité de traitement électronique commute plusieurs fois d'une voie d'entrée à une autre durant chacune des périodes de modulations Tm.

Les informations en provenance des différents photodétecteurs ne sont pas acquises séquentiellement mais de façon croisée. La lecture des photodétecteurs par l'unité de traitement électronique comporte donc des opérations en parallèle.

Grâce à sa rapidité d'acquisition, l'ellipsomètre selon l'invention est particulièrement adapté à des mesures en temps réel de phénomènes physiques.

En général, l'échantillon étudié est constitué d'un matériau non transparent. Le faisceau lumineux incident est alors réfléchi par l'échantillon. Cependant, il est possible d'étudier des échantillons constitués de matériaux transparents par transmission du faisceau lumineux incident au travers de l'échantillon, tout en restant dans le cadre de l'ellipsométrie.

Préférentiellement, l'ensemble de multiplexage et de numérisation produisant des valeurs du signal numérique multiplexé en des points d'échantillonnage, la fréquence de commutation est égale à la fréquence de modulation multipliée par le nombre de voies d'entrée et par le nombre de points d'échantillonnage par voie d'entrée et par période de modulation.

La configuration de l'ellipsomètre multi-détecteurs ainsi obtenue donne à l'ellipsomètre une efficacité et une rapidité optimale. En effet, à chaque période de modulation Tm, l'unité de traitement électronique balaye l'ensemble des voies d'entrée. Elle acquiert ainsi en parallèle, de façon quasi-simultanée, des informations en provenance de l'ensemble des photodétecteurs.

Dans un mode de réalisation avantageux de l'ellipsomètre selon l'invention, l'ensemble de multiplexage et de numérisation comprend un multiplexeur relié aux voies d'entrée et un numériseur relié au multiplexeur, le multiplexeur multiplexant en un signal analogique multiplexé les signaux analogiques mesurés en commutant successivement sur les voies d'entrée, et le numériseur convertissant en un signal numérique multiplexé le signal analogique multiplexé.

Cette solution présente l'avantage de nécessiter un unique numériseur, ce qui rend ce mode de réalisation peu coûteux et facile à réaliser.

La séparation du multiplexeur et du numériseur peut n'être que purement théorique, les deux fonctions correspondantes pouvant être réalisées dans un seul élément matériel.

L'unité de traitement électronique comprend avantageusement une unité de calcul préalable reliée au numériseur et à l'unité de traitement numérique de signaux, cette unité de calcul préalable réalisant un filtrage préalable du signal numérique multiplexé, par intégration sur plusieurs périodes de modulation.

L'acquisition et le traitement -des données -acquises pendant ces périodes de modulation Tm constituent un cycle de l'ellipsomètre selon l'invention.

Il est intéressant que l'ellipsomètre selon l'invention comporte des moyens d'excitation extérieure supplémentaire de l'échantillon capables de générer une modulation supplémentaire à une fréquence d'excitation distincte de la fréquence de modulation de polarisation.

Dans une première forme de réalisation avantageuse de l'ellipsomètre selon l'invention, celui-ci comprend une horloge externe à l'unité de traitement électronique générant la fréquence de modulation et un système de multiplication de fréquence. L'horloge externe est reliée au séquenceur par l'intermédiaire du système de multiplication de fréquence, et le séquenceur produit la fréquence de commutation à partir de la fréquence de modulation.

Dans une seconde forme de réalisation avantageuse de l'ellipsomètre selon l'invention, l'unité de traitement électronique comprend une horloge interne générant les fréquences de modulation et de commutation.

Cette horloge interne est typiquement utilisée avec un modulateur électro-optique.

Préférentiellement, l'unité de traitement électronique comprend au moins une carte de circuit imprimé, cette carte comportant préférentiellement au moins un circuit logique programmable.

Il est également avantageux que l'ellipsomètre selon l'invention comprenne une mémoire pré-traitement disposée entre l'ensemble de multiplexage et de numérisation et l'unité de traitement numérique de signaux. Cette mémoire pré-traitement stocke le signal numérique multiplexé pour au moins une période de modulation et le restitue ensuite à l'unité de traitement numérique de signaux.

De plus, l'ellipsomètre selon l'invention comprend avantageusement une interface utilisateur permettant la connexion de l'unité de traitement électronique à un réseau de communication.

L'invention a également pour objet un procédé de mesure ellipsométrique multi-détecteurs de paramètres physiques d'un échantillon. Dans ce procédé:
- on émet au moins un faisceau lumineux incident par au moins une source lumineuse,
- on polarise le faisceau lumineux incident par au moins un polariseur,
- on module le faisceau lumineux incident à une fréquence de modulation par au moins un modulateur de polarisation,
- on éclaire l'échantillon avec le faisceau lumineux incident, l'échantillon produisant un faisceau lumineux renvoyé ayant un état de polarisation,
- on analyse par au moins un analyseur l'état de polarisation du faisceau lumineux renvoyé,
- on mesure par au moins deux photodétecteurs des flux de parties du faisceau lumineux renvoyé, et on produit dans des voies d'entrée des signaux analogiques mesurés issus des photodétecteurs,
- on effectue par une unité de traitement électronique des opérations sur les signaux analogiques mesurés pour en déduire les paramètres physiques.

Ces opérations consistent en ce que:
- on multiplexe et on convertit, par un ensemble de multiplexage et de numérisation, en un signal numérique multiplexé les signaux analogiques mesurés, en commutant l'ensemble de multiplexage et de numérisation successivement sur les voies d'entrée à une fréquence de commutation,
- on dissocie le signal numérique multiplexé en des composantes correspondant respectivement aux voies d'entrée, et on applique à ces composantes des transformées de Fourier discrètes dont on extrait des paramètres de Fourier,
- on calcule les paramètres physiques à partir des paramètres de Fourier.

Selon l'invention, la fréquence de commutation est un multiple de la fréquence de modulation, de telle sorte qu'à la sortie de l'ensemble de multiplexage et de numérisation, les composantes sont entrelacées dans le signal numérique multiplexé.

Dans un premier mode de mise en oeuvre préféré du procédé selon l'invention, les parties du faisceau lumineux renvoyé parvenant aux photodétecteurs sont produites par une décomposition spectrale en longueur d'onde.

Dans un second mode de réalisation préféré du procédé selon l'invention, les parties du faisceau lumineux renvoyé parvenant aux photodétecteurs sont produites par une décomposition spatiale et sont issues de différentes zones de l'échantillon.

Dans un troisième mode de réalisation préféré du procédé selon l'invention, les parties du faisceau lumineux renvoyé parvenant aux photodétecteurs sont produites par une décomposition en différents état de polarisation.

Dans tous les cas, la mesure ellipsométrique peut être effectuée en présence d'une excitation extérieure supplémentaire modulée.

La présente invention sera mieux comprise à l'aide d'un exemple de réalisation et de mise en oeuvre, en référence aux dessins annexés, sur lesquels:

La Figure 1 est une représentation schématique d'un ellipsomètre multi-détecteurs selon l'invention.

La Figure 2 est une représentation schématique de l'unité de traitement électronique de l'ellipsomètre représenté sur la Figure 1.

La Figure 3 est un schéma synoptique des opérations effectuées par l'unité de traitement électronique de la Figure 2.

La Figure 4 montre l'enchaînement dans le temps des opérations d'acquisition et de traitement effectuées par l'unité de traitement électronique de la Figure 2 pendant plusieurs cycles.

La Figure 5 représente les évolutions temporelles du signal de modulation généré par le modulateur de phase de l'ellipsomètre de la Figure 1, du signal mesuré dans une des voies d'entrée, et de l'échantillonnage effectué par l'unité de traitement électronique de la Figure 2 sur cette voie d'entrée.

La Figure 6 montre l'entrelacement des échantillonnages effectués par l'unité de traitement électronique de la Figure 2 pour respectivement les différentes voies d'entrée.

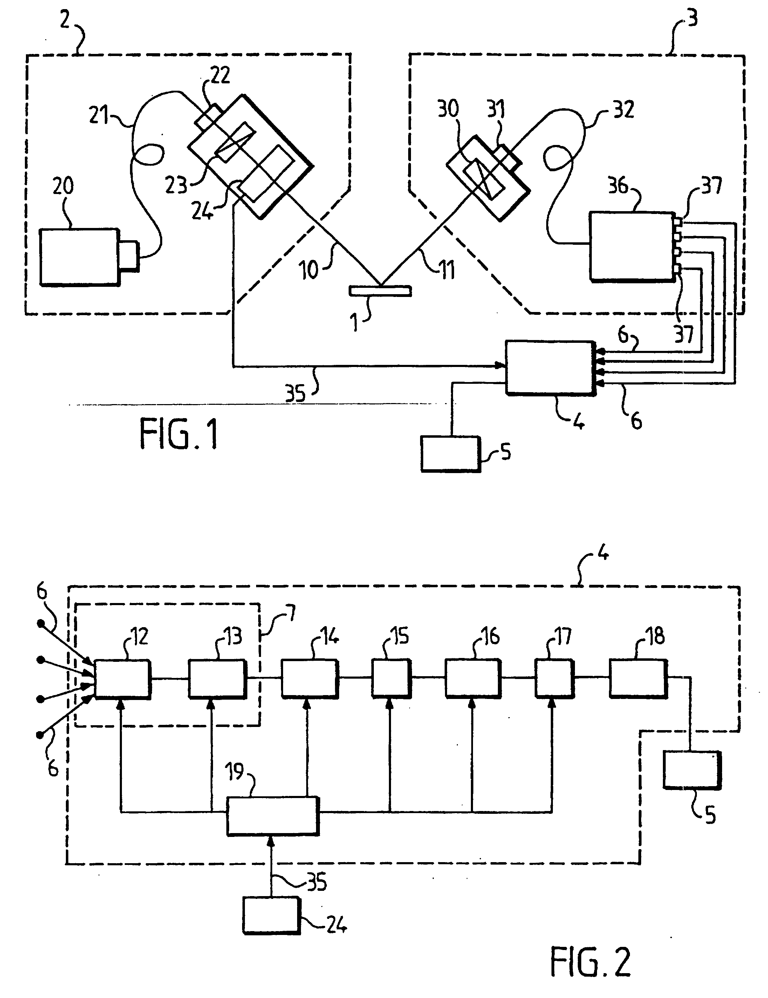

L'ellipsomètre multi-détecteurs, représenté sur la Figure 1, est destiné à la mesure de paramètres physiques d'un échantillon 1. Il comporte un groupe d'excitation 2, un groupe d'analyse 3, une unité de traitement électronique 4, et une interface utilisateur 5.

Le groupe d'excitation 2 comporte une source lumineuse 20 reliée à un système optique 22 par l'intermédiaire d'une fibre optique 21, le système optique 22 dirigeant un faisceau lumineux émis par la source 20 vers l'échantillon 1. Le groupe d'excitation 2 comporte également un polariseur 23 suivi d'un modulateur de phase 24 entre le système optique 22 et l'échantillon 1. Ce modulateur de phase 24 consiste typiquement en une barre de silice fondue soumise à une contrainte périodique générée par un transducteur piézo-électrique. On crée ainsi un déphasage modulé avec le temps entre deux axes propres de cette barre, modulant ainsi la polarisation de rayons lumineux émergents.

Le groupe d'analyse 3 comporte un analyseur 30 analysant un faisceau réfléchi par l'échantillon 1, suivi d'un système optique 31 adressant le faisceau réfléchi sur un spectrographe 36 par l'intermédiaire d'une fibre optique 32. Le spectrographe 36 est disposé de façon à disperser une lumière sur une série de photodétecteurs 37, au nombre de n, chacun d'entre eux permettant la mesure d'une longueur d'onde.

Ils peuvent être regroupés en barrettes à une dimension ou en matrices à deux dimensions, et sont reliés à l'unité de traitement électronique 4 par respectivement des connexions ou voies d'entrée 6. Chacun des photodétecteurs 37 transforme l'intensité d'un flux détecté en un signal électrique.

L'ellipsomètre spectroscopique multi-détecteurs de la Figure 1 permet ainsi de mesurer simultanément plusieurs longueurs d'onde, un multiplexage pouvant être réalisé dans l'unité de traitement électronique 4. Cette dernière reçoit également une référence de fréquence et de phase du modulateur de phase 24 par une ligne 35.

L'unité de traitement électronique 4 communique avec l'interface utilisateur 5, qui est typiquement une console d'ordinateur. En pratique, l'unité de traitement électronique 4 peut être connectée à un réseau informatique, tel que celui commercialisé sous le nom "Ethernet". Sa connexion à un réseau international permet d'en effectuer la maintenance même à une très grande distance de l'ellipsomètre.

En fonctionnement, la source lumineuse 20 émet un faisceau de lumière incidente 10 dans une gamme de longueurs d'onde donnée, ce faisceau étant polarisé linéairement par le polariseur 23, puis subissant une modulation par le modulateur de phase 24. Le faisceau lumineux incident 10 polarisé étant défini par un vecteur polarisation, le modulateur de phase 24 introduit entre des composantes perpendiculaires du vecteur polarisation, un déphasage dépendant du temps selon une variation périodique de fréquence Fm.

Le faisceau lumineux incident 10 polarisé et modulé devient, après réflexion sur l'échantillon 1, un faisceau réfléchi 11 ayant une amplitude et une phase résultant de propriétés physiques de l'échantillon 1. Ce faisceau réfléchi 11 est analysé dans l'analyseur 30, puis décomposé spectralement dans le spectrographe 36. Les photodétecteurs 37 mesurent alors des flux du faisceau lumineux réfléchi 11 à différentes longueurs d'onde. Ils produisent respectivement dans les voies d'entrée 6, des signaux électriques générés par l'intensité des flux, ou signaux analogiques mesurés 40. Ces signaux 40 sont reçus par l'unité de traitement électronique 4.

L'unité de traitement électronique 4 calcule ensuite à partir de ces signaux analogiques mesurés 40, des paramètres physiques 46 de l'échantillon 1, tels qu'une épaisseur de couche ou un indice de réfraction.

L'ellipsomètre spectroscopique à modulation de phase, représenté sur la Figure 1, est avantageusement utilisé dans un dispositif de contrôle d'élaboration de couches sur un substrat. L'échantillon 1 consiste alors en un substrat sur lequel on fait croître un dépôt par une technique connue. L'ellipsomètre précédemment décrit est utilisé pour contrôler la croissance de couche sur le substrat. Par ce moyen, on effectue des mesures in situ en temps réel qui ne perturbent pas le processus de croissance. Au lieu d'une croissance de couche, l'élaboration peut consister en une gravure.

L'interface utilisateur 5 permet de superviser des opérations réalisées par l'unité de traitement électronique 4, en les déclenchant et/ou en les contrôlant, et d'échanger des informations avec elle. Elle permet ainsi de décider d'initialisations et de calculs, de définir et de transmettre des paramètres d'acquisition, et de récupérer des résultats pour des visualisations. Elle rend aussi possible une télémaintenance de l'unité de traitement électronique 4.

Les paramètres d'acquisition comprennent par exemple des durées de mesure, des nombres de points d'acquisition et des types de déclenchement.

L'unité de traitement électronique 4, détaillée sur la Figure 2, comprend un ensemble 7 de multiplexage et de numérisation auquel aboutissent les voies d'entrée 6, multiplexant et convertissant les signaux analogiques mesurés 40 en un signal numérique multiplexé. Cet ensemble 7 est composé d'un multiplexeur 12 et d'un numériseur 13, la sortie du multiplexeur 12 étant reliée à l'entrée du numériseur 13.

Le multiplexeur 12 est un multiplexeur analogique apte à multiplexer les signaux analogiques mesurés 40 en un signal analogique multiplexé, en commutant successivement sur les voies d'entrée 6. La durée nécessaire au multiplexeur 12 pour commuter d'une voie d'entrée 6 à une autre et établir le signal analogique multiplexé en entrée du numériseur 13 est de l'ordre de 10 à 15 nanosecondes pour les circuits commerciaux actuels.

Le numériseur 13, ou convertisseur analogique-numérique, est typiquement un numériseur à 12 bits actuellement commercialisé, permettant de convertir de l'ordre de 20 à 30 millions d'échantillons par seconde.

L'ensemble 7 de multiplexage et de numérisation est prévu pour effectuer à partir de chaque voie d'entrée 6 un échantillonnage de P points par période de modulation Tm. Chacun des signaux analogiques mesurés 40 est donc échantillonné selon une période d'échantillonnage Tp égale à Tm/P.

L'unité de traitement électronique 4 comprend également une première unité de calcul 14 reliée à l'ensemble 7 de multiplexage et de numérisation. Elle a pour fonction de réaliser un filtrage préalable du signal numérique multiplexé, par intégration sur plusieurs périodes de modulation Tm associées à un cycle.

Le nombre N de ces périodes de modulation Tm d'un cycle est choisi par un utilisateur en fonction des phénomènes observés avec l'ellipsomètre. A chaque cycle, correspond une durée d'acquisition Ta égale à N x Tm, les paramètres physiques 46 de l'échantillon 1 étant déterminés pour ce cycle aussitôt après l'acquisition. Ainsi, le nombre N doit être suffisamment petit pour pouvoir suivre des phénomènes évolutifs mesurés en temps réel sur l'échantillon 1. En contrepartie, plus N est grand, meilleure est la précision obtenue pour un état donné de l'échantillon 1. A titre d'exemple, pour mesurer des croissances de couches sur un substrat, il est avantageux que le nombre N soit compris entre 50 et 1.000.000 pour une fréquence de modulation Fm de 50 kHz. La durée d'acquisition Ta est alors comprise entre 1 ms et 20 s. Afin d'obtenir les paramètres physiques 46 de l'échantillon 1 à un rythme maximal, il est cependant possible d'englober une unique période de modulation Tm dans chaque cycle.

Le filtrage préalable du signal numérique multiplexé réalisé par la première unité de calcul 14 met en oeuvre une technique de moyenne nécessitant une addition-accumulation, et produisant des résultats stockés dans des points d'acquisition. Typiquement, chaque point d'acquisition a une capacité de stockage de 32 bits. Le nombre de points d'acquisition pour chaque voie d'entrée 6 est égal au nombre P de points d'échantillonnage par période de modulation Tm.

Les résultats calculés par la première unité de calcul 14 sont stockés dans une première mémoire à double accès 15. Cette première mémoire 15 fait office de mémoire tampon entre la première unité de calcul 14 et l'étage suivant.

Elle communique par sa sortie avec une unité de traitement numérique de signaux 16 ou DSP (Digital Signal Processing). L'unité de traitement 16 peut par exemple être celle commercialisée sous la marque TMS 320C31 par la Société TEXAS INSTRUMENT, capable de réaliser des opérations en virgule flottante sur 32 bits. L'unité de traitement 16 a pour fonction d'effectuer des analyses de Fourier sur les résultats obtenus par la première unité de calcul 14 et stockés dans la première mémoire 15. Elle acquiert des données globalement pour chaque cycle, et reçoit donc à la fin de chaque accumulation un ensemble de valeurs typiquement codées sur 32 bits. Les analyses de Fourier sont préférentiellement effectuées par des opérations du type Transformées de Fourier Rapides ou FFT (Fast Fourier Transform). Elles conduisent à des paramètres de Fourier, qui sont stockés dans une seconde mémoire à double accès 17.

Cette seconde mémoire 17 a son entrée reliée à l'unité de traitement 16.

La sortie de la seconde mémoire 17 est reliée à une seconde unité de calcul 18. Celle-ci est destinée à calculer les paramètres physiques 46 à partir des paramètres de Fourier déterminés par l'unité de traitement numérique de signaux 16.

L'unité de traitement électronique 4 comporte également un séquenceur 19 relié aux éléments 12, 13, 14 et 16 précédemment décrits, ayant pour fonction de leur envoyer des signaux de synchronisation. Il permet ainsi de piloter des processus et de les synchroniser. Le séquenceur 19 est relié au modulateur de phase 24 par la ligne de référence 35, et est synchronisé par rapport au modulateur de phase 24 au moyen d'un système de multiplication de fréquence. Ce système consiste typiquement en une boucle à phase asservie ou PLL (Phase-Locked Loop). Le séquenceur 19 est ainsi capable de produire les signaux de synchronisation à une fréquence multiple de la fréquence de modulation Fm.

Pour des raisons de simplification de procédure, et bien que cela ne soit pas absolument nécessaire, chaque élément de l'unité de traitement électronique 4 à l'exception du séquenceur 19 ne dialogue qu'avec des éléments qui lui sont directement adjacents. Les fonctions du séquenceur 19 ne concernent pas seulement la coordination des acquisitions avec le modulateur de phase 24. Elles s'appliquent aussi au démarrage des acquisitions, en fonction d'un déclenchement provenant par exemple d'un signal de validation externe, et à la mise en route des différentes phases d'étalonnage.

En pratique, l'ensemble des éléments de l'unité de traitement électronique 4 à l'exception de la seconde unité de calcul 18 sont avantageusement réalisés sur une carte de circuit imprimé. Dans l'exemple de réalisation choisi, la première unité de calcul 14 et au moins une partie du séquenceur 19 sont regroupées dans au moins un circuit logique programmable ou FPGA (Field Programmable Gate Array), les caractéristiques fonctionnelles de ce type de circuit intégré pouvant être configurées par un utilisateur. Ce circuit logique programmable est capable d'effectuer des commandes en parallèle, en travaillant en mode de chevauchement (pipelining) par opposition à une exécution séquentielle d'opérations. L'unité de traitement numérique de signaux 16 utilise un processeur en virgule flottante.

La seconde unité de calcul 18 fait quant à elle partie d'une unité centrale, de type ordinateur personnel ou PC, gérée par un système d'exploitation multi-tâches en temps réel. Cette unité centrale est apte à fonctionner selon différents modes: acquisition, contrôle, calcul, accès à un réseau extérieur, et statistiques.

Elle permet ainsi de collecter des données en provenance de la seconde mémoire 17, d'effectuer des calculs sur ces données en fonction de modes opératoires choisis, et d'archiver les résultats en vue de traitements ultérieurs, tels qu'une analyse a posteriori ou des statistiques. Elle contrôle également l'initialisation de l'ellipsomètre, et supervise son étalonnage.

L'unité centrale comporte un bus sur lequel peut être connectée la carte de circuit imprimé contenant les éléments 12 à 17 et 19, ce bus pouvant être par exemple de l'un des types commercialisés sous les noms ISA et PCI. La carte de circuit imprimé est programmable à partir de l'unité centrale ou par l'intermédiaire d'un réseau du type appelé "Ethernet" par téléchargement. Il est ainsi possible de définir la configuration de la carte en fonction du mode opératoire désiré, de charger des configurations de tests, de mettre à jour des versions en fonction d'évolution de l'ellipsomètre, et de faire de la télémaintenance sur site sans manipulation de la carte.

L'unité centrale comprenant la seconde unité de calcul 18 est susceptible de recevoir plusieurs cartes de circuit imprimé telles que celle précédemment décrite, l'ensemble des cartes étant connectés sur le bus de l'unité centrale. Des informations en nombre plus important peuvent ainsi être traitées et corrélées.

De plus, elle peut comporter des cartes de circuits imprimés remplissant des fonctions spécifiques nécessaires au fonctionnement de l'ellipsomètre, telles que des commandes de positionnement, d'obturateur, et d'alimentation.

En raison du développement et de l'intégration actuels de composants rapides, l'unité de traitement électronique 4 peut avantageusement comprendre de tels composants.

L'unité de traitement électronique 4 peut fonctionner de manière autonome sans nécessiter de lien avec l'interface utilisateur 5. Elle effectue alors une suite d'opérations préenregistrées, ou définies par chargement préalable à partir d'un système source. En fin d'opération, elle est alors à même de transmettre les résultats obtenus à un réseau, en direction d'un ou de plusieurs utilisateurs finaux. L'unité de traitement électronique 4 peut donc être considérée comme un système complet, dit "embarqué" (Embedded System).

L'unité de traitement électronique 4 peut aussi être reliée à un autre système, en vue de contrôler par exemple un procédé d'élaboration. En particulier, cette utilisation conjointe peut être utilisée pour un dépôt de couches minces.

L'interface utilisateur 5 est elle-même susceptible de communiquer non seulement avec l'unité de traitement électronique 4, mais aussi avec d'autres applications, ce qui peut permettre par exemple de corréler les informations provenant de plusieurs appareils.

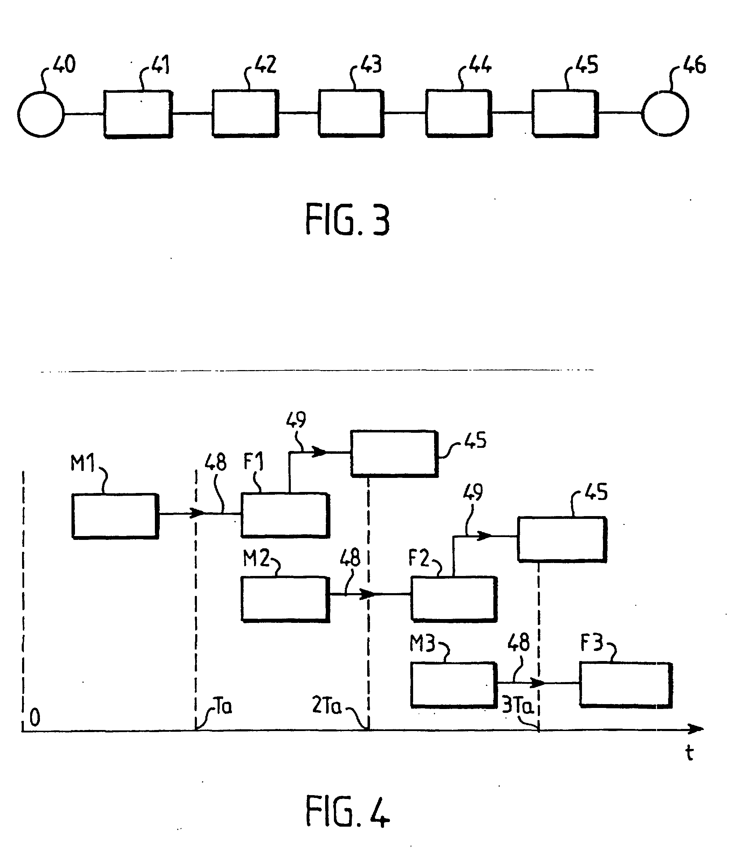

En fonctionnement, les étapes suivantes représentées sur la Figure 3 sont effectuées successivement par l'unité de traitement électronique 4. Dans une première étape 41 de multiplexage, les signaux analogiques mesurés 40 parvenant au multiplexeur 12 par les voies d'entrée 6 sont multiplexés en un signal analogique multiplexé. Lors d'une deuxième étape 42 de numérisation, le signal analogique multiplexé est converti par le numériseur 13 en un signal numérique multiplexé. Dans une troisième étape 43 de filtrage préalable, le signal numérique multiplexé est intégré par la première unité de calcul 14. Les résultats du filtrage préalable accumulés pour un cycle d'acquisition dans la première mémoire 15 sont traités par l'unité de traitement numérique de signaux 16 lors d'une quatrième étape 44 d'analyse de Fourier. L'unité de traitement 16 extrait des composantes correspondant respectivement aux voies d'entrée 6 et calcule, pour chacune des composantes, des paramètres de Fourier associés. De façon classique, les paramètres de Fourier calculés pour chacun des signaux analogiques mesurés 40 consistent en les composantes continu, à la fréquence Fm et à la fréquence 2Fm de ces signaux. Les paramètres physiques 46 sont ensuite déterminés par la seconde unité de calcul 18 à partir des paramètres de Fourier stockés dans la seconde mémoire 17, lors d'une cinquième étape 45 de calcul des paramètres physiques 46. On trouvera une description de ces calculs dans l'article de B. DREVILLON précédemment cité.

L'enchaînement des différents cycles, schématisé sur la Figure 4, montre comment les étapes décrites ci-dessus se succèdent et se chevauchent d'un cycle à l'autre. On nomme Mi l'ensemble des étapes de multiplexage 41, de numérisation 42 et de filtrage préalable 43 pour le cycle numéro i et Fi l'étape 44 d'analyse de Fourier pour ce même cycle.

Après que le démarrage de l'acquisition des signaux analogiques mesurés 40 ait été déclenché, le premier cycle d'acquisition se met en route. L'ensemble des signaux analogiques mesurés 40 provenant des n voies d'entrée 6 sont alors successivement multiplexés, numérisés et préalablement filtrés, pendant la phase M1. Les résultats obtenus sont stockés progressivement par points d'acquisition dans la première mémoire 15. La phase M1 a une durée environ égale à la durée d'acquisition Ta, valant N x Tm, car l'ensemble des opérations durant cette phase M1 sont effectuées au fur et à mesure des acquisitions.

Au bout de la durée d'acquisition Ta, un premier transfert d'informations 48 est effectué depuis la première mémoire 15 jusqu'à l'unité de traitement numérique de signaux 16. A la fin du transfert 48, le deuxième cycle d'acquisition commence. La phase M2 se déroule ainsi entre les instants Ta et 2Ta, la phase F1 du premier cycle étant menée pendant cette durée. Le nombre de données traitées au cours de la phase F1 est généralement petit par rapport à la phase précédente M1, du fait du regroupement effectué par intégration lors de l'étape 43 de filtrage préalable, si bien que la durée de traitement disponible laisse la possibilité de réaliser des calculs complexes.

Un transfert d'informations 49 de la seconde mémoire 17 vers la seconde unité de calcul 18 permet de finalement calculer les paramètres physiques 46 cherchés lors de l'étape 45. Dans l'exemple de réalisation choisi, cette étape 45 est menée indépendamment des phases M1 et F1 précédentes, car elle est effectuée par l'unité centrale. Le transfert 49 des paramètres de Fourier peut donc être effectué avant la fin de la seconde période d'acquisition Ta, et même avant la fin de la phase F1, à mesure que les paramètres de Fourier associés aux différentes voies d'entrée 6 sont disponibles.

A l'instant 2Ta clôturant l'acquisition des signaux analogiques mesurés 40 pour le deuxième cycle, la phase M2 étant achevée, le transfert d'informations 48 s'effectue, puis la phase F2 commence en même temps que les acquisitions démarrant la phase M3 du troisième cycle. L'ensemble des opérations décrites précédemment est alors reproduit à l'identique avec une incrémentation du numéro i du cycle.

On remarquera que les chevauchements pratiqués lors de l'enchaînement des cycles permettent de réduire la durée totale des opérations à celle des acquisitions par l'unité de traitement électronique 4 des signaux analogiques mesurés 40.

L'ensemble de ces acquisitions s'effectue parallèlement pour l'ensemble des voies d'entrée 6 durant chaque cycle.

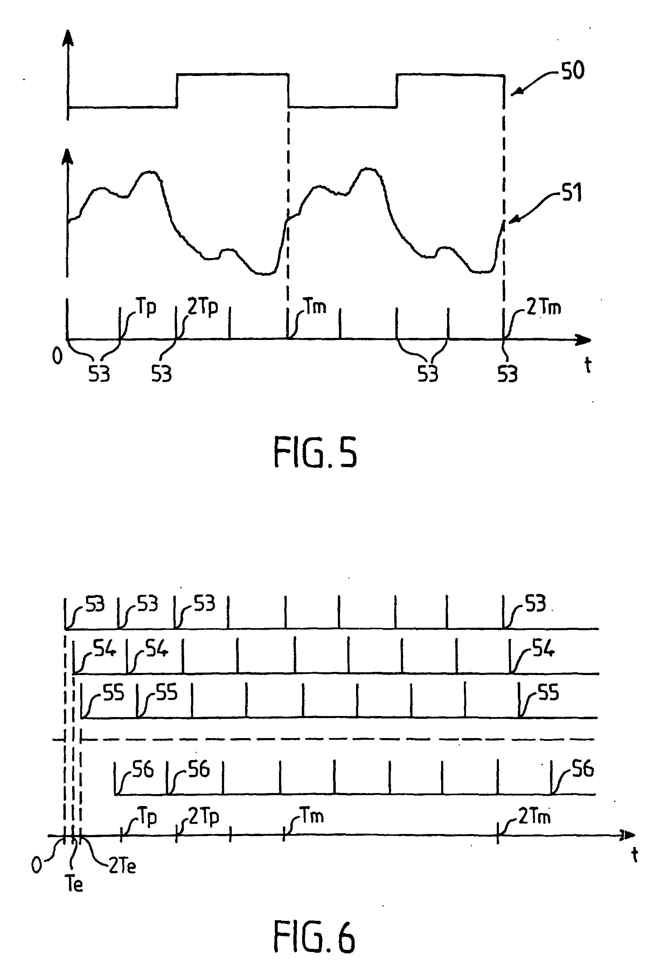

Le modulateur de phase 24 produit en fonction du temps t un signal de référence 50 ayant pour période de modulation Tm, par exemple en créneau, comme représenté à la Figure 5. Suite à cette modulation, les photodétecteurs 37 mesurant des flux du faisceau lumineux 11 à différentes longueurs d'onde engendrent dans les voies d'entrée 6 des signaux analogiques mesurés 40 admettant eux mêmes la période de modulation Tm. A titre d'illustration, on considère le signal analogique mesuré 51 obtenu dans l'une des voies d'entrée 6 (Figure 5). L'ensemble 7 de multiplexage et de numérisation effectue sur ce signal analogique mesuré 51 un échantillonnage de P points d'échantillonnage 53 sur chaque période de modulation Tm. Dans l'exemple représenté sur la Figure 5, le nombre P vaut 4. Le signal analogique mesuré 51 est donc échantillonné à une période Tp égale à Tm/P.

Pour chacune des voies d'entrée 6, un échantillonnage semblable à la période d'échantillonnage Tp est réalisé, mais avec un décalage temporel inférieur à cette période d'échantillonnage Tp. Les signaux nécessaires à la commande du multiplexeur 12 et du numériseur 13 sont délivrés par le séquenceur 19. La période d'échantillonnage Tp est divisée en n parties égales (n étant le nombre de voies d'entrée 6), qui définisent une période de commutation Te valant Tp/n.

Durant chaque période de commutation Te, le multiplexeur 12 acquiert l'un des signaux analogiques mesurés 40 en provenance de l'une des voies d'entrée 6. Au bout de cette durée, il sélectionne par commutation la voie d'entrée 6 suivante. En une période d'échantillonnage Tp, le multiplexeur 12 balaie ainsi l'ensemble des voies d'entrée 6. A chaque connexion du multiplexeur 12 sur une voie d'entrée 6, le numériseur 13 extrait un point d'échantillonnage.

L'enchaînement des échantillonnages selon les différentes voies d'entrée 6 s'effectue donc comme suit, tel que représenté à la Figure 6. Au démarrage des acquisitions, l'ensemble 7 de multiplexage et de numérisation sélectionne un point d'échantillonnage 53 sur le signal analogique mesuré 51 en provenance de la première des voies d'entrée 6. Après une période de commutation Te, l'ensemble 7 commute sur la deuxième des voies d'entrée 6 et sélectionne un point d'échantillonnage 54 sur le signal analogique mesuré qui en provient. Cette opération est répétée pour la troisième, puis jusqu'à la n-ième des voies d'entrée 6, pour lesquelles sont sélectionnés respectivement des points d'échantillonnage 55 et 56. Le multiplexeur 12 sélectionne alors de nouveau la première des voies d'entrée 6, de telle sorte que l'ensemble 7 de muliplexage et de numérisation produit de nouveau une valeur du signal analogique mesuré 51 en un autre point d'échantillonnage 53, au bout d'une période d'échantillonnage Tp depuis le démarrage des acquisitions.

L'ensemble 7 procède de la même façon qu'indiquée précédemment pour les (P-1) périodes d'échantillonnage Tp suivantes, jusqu'au déroulement complet d'une période de modulation Tm, puis des N périodes de modulation Tm constituant le premier cycle.

La durée d'acquisition Ta correspondant à un cycle est indépendante du nombre n de voies d'entrée 6, grâce au parallélisme des opérations. Elle est égale à N x Tm.

On constatera que dans le signal numérique multiplexé issu de l'ensemble 7 de multiplexage et de numérisation, les valeurs issues respectivement des différentes voies d'entrée 6 sont entrelacées.

Les décalages temporels multiples de la période de commutation Te obtenus entre les échantillonnages des différents signaux analogiques mesurés 40 sont pris en compte par l'unité de traitement numérique de signaux 16 au moyen de termes correctifs dépendant du numéro de la voie d'entrée 6 considérée. Ces termes correctifs sont notamment utilisés pour déterminer la phase des composantes de Fourier aux fréquences Fm et 2Fm, par rapport au signal de référence 50.

Les acquisitions successives de l'ensemble 7 de multiplexage et de numérisation sont commandées par le séquenceur 19, qui envoie les signaux de synchronisation à la période de commutation Te. Le séquenceur 19 produit ces signaux à partir du signal de référence 50 du modulateur de phase 24, par multiplication de fréquences.

Dans un exemple représentatif de mise en oeuvre, la fréquence de modulation Fm vaut 50 kHz, le nombre n de voies d'entrée 6 vaut 32 et le nombre-P de points vaut 8. Le numériseur 13 doit donc extraire Fm x n x P valeurs par seconde, soit 12,8 millions de valeur par seconde. Cette vitesse est cohérente avec les capacités du numériseur 13, qui peut convertir de l'ordre de 20 à 30 millions d'échantillons par seconde, en tenant compte du temps de commutation du multiplexeur 12 et du temps d'établissement du signal en entrée du numériseur 13. La période de commutation Te vaut alors environ 78 ns.

La première unité de calcul 14 reçoit ainsi des informations à un rythme élevé, correspondant à une donnée de 12 bits toutes les 78 ns. En revanche l'unité de traitement numérique de signaux 16 ne reçoit des informations qu'au bout de durées égales à la durée d'acquisition Ta, usuellement supérieure ou égale à 1 ms. Ces informations résultent de l'intégration sur un cycle des valeurs reçues par la première unité de calcul 14, afin d'en obtenir des moyennes sur une période de modulation Tm. L'unité de traitement numérique de signaux 16 reçoit donc pour chaque cycle P x n, soit 256, valeurs codées sur 32 bits.

Les valeurs numériques utilisées dans l'exemple ont un simple but explicatif et ne sont aucunement limitatives. En particulier, la fréquence de modulation Fm, le nombre n de voies d'entrée 6, le nombre P de points d'échantillonnage par période de modulation Tm, ainsi que les durées Tp et Te qui en résultent, peuvent être très différentes. Ainsi, un autre mode de réalisation valable avec le même numériseur 13 consiste à utiliser une fréquence de modulation Fm égale à 100 kHz, 16 voies d'entrée 6, et 8 points d'échantillonnage par voie d'entrée 6 et par période de modulation Tm.

Si la fréquence de modulation Fm est faible devant les capacités de l'unité de traitement électronique 4, il est possible de modifier les conditions d'acquisition pour améliorer le traitement des données en accumulant des points d'échantillonnage, ce qui a pour effet d'améliorer la résolution apparente du numériseur 13.

A titre d'exemple, pour une fréquence de modulation Fm de 2 kHz, on utilise 32 voies d'entrée 6, et on considère 128 points d'échantillonnage par voie d'entrée 6 et par période de modulation Tm, ces points étant stockés sur 12 bits. En accumulant les 128 points sous la forme de 8 groupes de 16, la résolution réelle de 12 bits du numériseur 13 est transformée en une résolution apparente de 16 bits, pour une analyse de Fourier effectuée sur 8 valeurs.

Au lieu de connecter l'ensemble 7 de multiplexage et de numérisation à une nouvelle voie d'entrée 6 à chaque acquisition d'un point d'échantillonnage, il est possible d'acquérir plusieurs points d'échantillonnage entre deux commutations. La fréquence de commutation Fe est alors toujours un multiple de la fréquence de modulation Fm multipliée par le nombre n de voies d'entrée 6, mais plus nécessairement par le nombre P de points d'échantillonnage.

Il est aussi possible de ne balayer l'ensemble des n voies d'entrée 6 que sur plusieurs périodes de modulation Tm. La fréquence de commutation Fe est alors un multiple de la fréquence de modulation Fm multipliée par le nombre P, mais plus nécessairement par le nombre n de voies d'entrée 6.

Il est clair qu'une troisième possibilité, consistant à la fois à acquérir plusieurs points d'échantillonnage entre deux commutations et à balayer l'ensemble des n voies d'entrée 6 sur plusieurs périodes de modulation Tm, conduit à une fréquence de commutation Fe qui n'est plus multiple que de la fréquence de modulation Fm.

La solution adoptée dans l'exemple d'illustration est cependant optimale si les capacités du multiplexeur 12 le permettent, dans la mesure où les acquisitions des n voies d'entrée 6 sont quasi-simultanées.

L'ellipsomètre selon l'invention peut être complété par des moyens d'excitation extérieurs capables, par exemple, d'envoyer sur l'échantillon 1 un faisceau optique supplémentaire d'excitation indépendant à une fréquence distincte de la fréquence de modulation Fm. Cette excitation peut être également de nature électrique ou magnétique.

La présence de circuits programmables dans la carte de circuit imprimé permet alors de s'adapter à une modulation multiple, par simple changement de la suite d'opérations logiques gérant le séquenceur 19, quel que soit le rapport entre les différentes fréquences. Les seules conditions requises consistent en ce que la démodulation soit compatible avec les capacités de l'ensemble 7 de multiplexage et de numérisation.

L'ensemble 7 de multiplexage et de numérisation peut être réalisé d'une autre façon que celle présentée. On peut ainsi employer un numériseur par voie d'entrée 6, les signaux numériques obtenus étant multiplexés ensuite par un multiplexeur numérique comprenant un bus approprié. Cette solution est cependant plus coûteuse que celle adoptée car elle nécessite l'implantation d'un nombre plus important de composants, et elle est plus difficile à réaliser matériellement, en particulier à cause de la nécessité de disposer d'un bus numérique ayant une capacité suffisante. Dans l'exemple présenté, ce bus numérique doit pouvoir être connecté à 32 circuits envoyant des informations converties sur 12 bits.

Les deux modes de réalisation de l'ensemble 7 de multiplexage et de numérisation peuvent aussi être combinés. L'ensemble 7 comprend alors plusieurs multiplexeurs analogiques, chacun d'entre eux recevant une partie des voies d'entrée 6 et étant relié à un numériseur. Les numériseurs sont connectés au bus d'un multiplexeur numérique. Cette solution intermédiaire est avantageuse par rapport à l'utilisation d'un numériseur par voie d'entrée pour les mêmes raisons que celles données ci-dessus. Elle s'avère nécessaire par rapport à l'utilisation d'un unique numériseur si les capacités de traitement de celui-ci sont insuffisantes en particulier en présence de voies d'entrée trop nombreuses.

Plutôt que d'introduire des décalages temporels entre les échantillonnages associés aux différentes voies d'entrée 6, il est possible de réaliser l'acquisition synchrone de toutes les voies d'entrée 6 en insérant un échantillonneur-bloqueur entre chacune des voies d'entrée 6 et le multiplexeur 12. La solution présentée initialement minimise cependant les coûts de réalisation.

Alors que dans le mode de réalisation présenté, le séquenceur 19 est synchronisé par rapport au modulateur de phase 24, un autre mode de réalisation consiste à munir l'unité de traitement électronique 4 d'une horloge interne délivrant à la fois des signaux nécessaires au fonctionnement de l'unité de traitement électronique 4 et des signaux pilotant des composants extérieurs, tels qu'un modulateur de polarisation remplaçant le modulateur de phase 24. L'horloge interne génère ainsi à la fois la période de commutation Te, et la période de modulation Tm par division de fréquence.

L'interface utilisateur 5 peut être employée comme un simple outil de contrôle, ou même supprimée.

Si l'utilisateur le souhaite, le comportement de l'unité de traitement électronique 4 peut être figé en mémoire non volatile. Celle-ci devient alors un système dédié à une application particulière et perd son caractère programmable.

La réalisation des éléments 12 à 17 et 19 dans une carte de circuit imprimé, et celle de la seconde unité de calcul 18 dans une unité centrale, doivent être considérés comme des réalisations préférentielles, n'excluant pas d'autres possibilités. Ainsi, l'unité de traitement électronique 4 dans son ensemble peut être intégrée avec l'unité centrale d'un ordinateur, bien que cette conception soit plus difficile à mettre en oeuvre que celle adoptée dans l'exemple décrit plus haut. La répartition choisie dans l'exemple présenté, consistant à utiliser une unité centrale d'ordinateur pour la seconde unité de calcul 18, est cependant plus judicieuse en regard de la diversité des opérations susceptibles d'être effectuées à partir des paramètres de Fourier.

D'autres modes de réalisation de l'unité de traitement électronique 4, associant une ou plusieurs cartes de circuit imprimé avec un ou plusieurs ordinateurs sont également envisageables.

Bien qu'on se soit intéressé jusqu'à présent à une modulation de phase, le domaine d'application de la technique correspond plus généralement à l'ellipsométrie à modulation de polarisation.

D'autre part, l'ellipsomètre selon l'invention peut être utilisé non seulement en spectroscopie, pour analyser un faisceau lumineux renvoyé par un échantillon selon plusieurs longueurs d'onde, mais aussi dans le domaine de l'imagerie, les photodétecteurs 37 recevant des parties du faisceau renvoyé 11 en provenance de différences zones de l'échantillon 1. Plusieurs faisceaux incidents synchronisés éclairant l'échantillon 1 en différentes zones peuvent également être employés.

Dans un autre mode de réalisation de l'ellipsomètre selon l'invention, le faisceau lumineux renvoyé 11 est décomposé par un polarimètre en différents états de polarisation. Ce mode de réalisation est approprié à des mesures en présence de diffusion de lumière par l'échantillon 1 ou par un système physique.

Plus généralement, l'ellipsomètre et le procédé de mesure selon l'invention sont exploitables dès lors qu'on s'intéresse à plusieurs parties d'un ou de plusieurs faisceaux lumineux, chacune de ces parties étant mesurée par un photodétecteur 37.

## Revendications

1. Ellipsomètre multi-détecteurs comportant:
- au moins une source lumineuse (20) émettant au moins un faisceau lumineux incident (10),
- au moins un polariseur (23) polarisant ledit faisceau lumineux incident (10),
- au moins un modulateur de polarisation (24) générant une modulation de polarisation à une fréquence de modulation (Fm) du faisceau lumineux (10) de lumière polarisée,
- des moyens d'éclairage d'un échantillon (1) par le faisceau lumineux incident (10) produisant un faisceau lumineux renvoyé (11) ayant un état de polarisation,
- au moins un analyseur (30) analysant l'état de polarisation du faisceau lumineux renvoyé (11),
- au moins deux photodétecteurs (37) mesurant des flux de parties du faisceau lumineux renvoyé (11) et produisant dans des voies d'entrée (6) des signaux analogiques mesurés (40),
- au moins une unité de traitement électronique (4) reliée aux voies d'entrée (6), calculant des paramètres physiques (46) de l'échantillon (1) à partir des signaux analogiques mesurés (40), ladite unité de traitement électronique (4) comportant:
- au moins un ensemble (7) de multiplexage et de numérisation, multiplexant (41) et convertissant (42) les signaux analogiques mesurés (40) en un signal numérique multiplexé, l'ensemble (7) de multiplexage et de numérisation commutant successivement sur les voies d'entrée (6) à une fréquence de commutation (Fe),
- une unité de traitement numérique de signaux (16) reliée à l'ensemble (7) de multiplexage et de numérisation, dissociant le signal numérique multiplexé en des composantes correspondant respectivement aux voies d'entrée (6) et appliquant (44) auxdites composantes des transformées de Fourier discrètes pour en extraire des paramètres de Fourier,
- une unité de calcul finale (18) reliée à l'unité de traitement numérique de signaux (16), calculant les paramètres physiques (46) à partir des paramètres de Fourier,
- un séquenceur (19) relié à l'ensemble (7) de multiplexage et de numérisation, et à l'unité de traitement numérique de signaux (16), ledit séquenceur (19) envoyant des signaux de synchronisation,
**caractérisé en ce que** ledit séquenceur (19) comporte des moyens (24, 35) permettant d'imposer à la fréquence de commutation (Fe) d'être un multiple de la fréquence de modulation (Fm).

2. Ellipsomètre selon la revendication 1, **caractérisé en ce que** l'ensemble (7) de multiplexage et de numérisation produisant des valeurs du signal numérique multiplexé en des points d'échantillonnage (53, 54, 55, 56), la fréquence de commutation (Fe) est égale à la fréquence de modulation (Fm) multipliée par le nombre de voies d'entrée (n) et par le nombre (P) de points d'échantillonnage par voie d'entrée (6) et par période de modulation (Tm).

3. Ellipsomètre selon l'une des revendications 1 ou 2, **caractérisé en ce que** l'ensemble (7) de multiplexage et de numérisation comprend un multiplexeur (12) relié aux voies d'entrée (6) et un numériseur (13) relié au multiplexeur (12), le multiplexeur (12) multiplexant en un signal analogique multiplexé les signaux analogiques mesurés (40) en commutant successivement sur les voies d'entrée (6), et le numériseur (13) convertissant en un signal numérique multiplexé le signal analogique multiplexé.

4. Ellipsomètre selon l'une quelconque des revendications 1 à 3, **caractérisé en ce que** l'unité de traitement électronique (4) comprend une unité de calcul préalable (14) reliée au numériseur (13) et à l'unité de traitement numérique de signaux (16), ladite unité de calcul préalable (14) réalisant un filtrage préalable du signal numérique multiplexé, par intégration sur plusieurs périodes de modulation (Tm).

5. Ellipsomètre selon l'une quelconque des revendications précédentes, **caractérisé en ce qu'**il comporte des moyens d'excitation extérieure supplémentaire de l'échantillon (1) capables de générer une modulation supplémentaire à une fréquence d'excitation distincte de la fréquence de modulation (Fm) de polarisation.

6. Ellipsomètre selon l'une quelconque des revendications précédentes, **caractérisé en ce qu'**il comprend une horloge externe (24) à l'unité de traitement électronique (4) générant la fréquence de modulation (Fm) et un système de multiplication de fréquence, ladite horloge externe (24) étant reliée au séquenceur (19) par l'intermédiaire du système de multiplication de fréquence, et le séquenceur (19) produisant la fréquence de commutation (Fe) à partir de la fréquence de modulation (Fm).

7. Ellipsomètre selon l'une quelconque des revendications 1 à 5, **caractérisé en ce que** l'unité de traitement électronique (4) comprend une horloge interne générant les fréquences de modulation (Fm) et de commutation (Fe).

8. Ellipsomètre selon l'une quelconque des revendications précédentes, **caractérisé en ce que** l'unité de traitement électronique (4) comprend au moins une carte de circuit imprimé, ladite carte comportant préférentiellement au moins un circuit logique programmable.

9. Ellipsomètre selon l'une quelconque des revendications précédentes, **caractérisé en ce qu'**il comprend une mémoire pré-traitement (15) disposée entre l'ensemble (7) de multiplexage et de numérisation et l'unité de traitement numérique de signaux (16), ladite mémoire pré-traitement (15) stockant le signal numérique multiplexé pour au moins une période de modulation (Tm) et le restituant ensuite à l'unité de traitement numérique de signaux (16).

10. Ellipsomètre selon l'une quelconque des revendications précédentes, **caractérisé en ce qu'**il comprend une interface utilisateur (5) permettant la connexion de l'unité de traitement électronique (4) à un réseau de communication.

11. Procédé de mesure ellipsométrique multi-détecteurs de paramètres physiques (46) d'un échantillon (1 ), dans lequel:
- on émet au moins un faisceau lumineux incident (10) par au moins une source lumineuse (20),
- on polarise le faisceau lumineux incident (10) par au moins un polariseur (23),
- on module le faisceau lumineux incident (10) à une fréquence de modulation (Fm) par au moins un modulateur de polarisation (24),
- on éclaire l'échantillon (1) avec le faisceau lumineux incident (10), l'échantillon (1) produisant un faisceau lumineux renvoyé (11) ayant un état de polarisation,
- on analyse par au moins un analyseur (30) l'état de polarisation du faisceau lumineux renvoyé (11),
- on mesure par au moins deux photodétecteurs (37) des flux de parties du faisceau lumineux renvoyé (11), et on produit dans des voies d'entrée (6) des signaux analogiques mesurés (40) issus des photodétecteurs (37),
- on effectue par une unité de traitement électronique (4) des opérations (41, 42, 44, 45) sur les signaux analogiques mesurés (40) pour en déduire les paramètres physiques (46), lesdites opérations consistant en ce que:
- on multiplexe (41) et on convertit (42), par un ensemble (7) de multiplexage et de numérisation, en un signal numérique multiplexé les signaux analogiques mesurés (40), en commutant l'ensemble (7) de multiplexage et de numérisation successivement sur les voies d'entrée (6) à une fréquence de commutation (Fe),
- on dissocie le signal numérique multiplexé en des composantes correspondant respectivement aux voies d'entrée (6), et on applique (44) auxdites composantes des transformées de Fourier discrètes dont on extrait des paramètres de Fourier,
- on calcule (45) les paramètres physiques (46) à partir des paramètres de Fourier,
**caractérisé en ce que** la fréquence de commutation (Fe) est un multiple de la fréquence de modulation (Fm), de telle sorte qu'à la sortie de l'ensemble (7) de multiplexage et de numérisation, lesdites composantes sont entrelacées dans le signal numérique multiplexé.

12. Procédé selon la revendication 11, **caractérisé en ce que** les parties du faisceau lumineux renvoyé (11) parvenant aux photodétecteurs (37) sont produites par une décomposition spectrale en longueur d'onde.

13. Procédé selon la revendication 11, **caractérisé en ce que** les parties du faisceau lumineux renvoyé (11) parvenant aux photodétecteurs (37) sont produites par une décomposition spatiale et sont issues de différentes zones de l'échantillon (1).

14. Procédé selon la revendication 11, **caractérisé en ce que** les parties du faisceau lumineux renvoyé (11 ) parvenant aux photodétecteurs (37) sont produites par une décomposition en différents états de polarisation.

## Patentansprüche

1. Ellipsometer mit mehreren Detektoren, umfassend:
mindestens eine mindestens einen einfallenden Lichtkegel (10) emittierende Lichtquelle (20),
mindestens einen den einfallenden Lichtkegel (10) polarisierenden Polarisator (23),
mindestens einen Polarisationsmodulator (24), welcher eine Polarisationsmodulation des polarisierten einfallenden Lichtkegels (10) bei einer Modulationsfrequenz (Fm) erzeugt,
Mittel zum Beleuchten einer Probe (1) mit dem einfallenden Lichtkegel (10), wobei ein zurückgeworfener Lichtkegel (11) mit einem Polarisationszustand erzeugt wird,
mindestens einen den Polarisationszustand des zurückgeworfenen Lichtkegels (11) analysierenden Analysator (30),
mindestens zwei Fotodetektoren (37), welche einen Fluss von Teilen des zurückgeworfenen Lichtkegels (11) messen und gemessene analoge Signale (40) in Eingangskanälen (6) erzeugen,
mindestens eine mit den Eingangskanälen (6) verbundene elektronische Verarbeitungseinheit(4), welche ausgehend von den gemessenen analogen Signalen (40) physikalische Parameter (46) der Probe (1) berechnet, wobei die elektronische Verarbeitungseinheit(4) umfasst:
mindestens eine Multiplexer- und Digitalisierungseinrichtung (7), welche die gemessenen analogen Signale (40) multiplext (41) und in ein digitales Multiplexsignal umwandelt (42), wobei die Multiplexer- und Digitalisierungseinrichtung (7) sukzessive mit einer Umschaltfrequenz (Fe) zwischen den Eingangskanälen (6) umschaltet,
eine mit der Multiplexer- und Digitalisierungseinrichtung (7) verbundene digitale Signalverarbeitungseinheit (16), welche das digitale Multiplexsignal in mit jeweiligen Eingangskanälen (6) korrespondierende Komponenten aufspaltet und auf diese Komponenten diskrete Fourier-Transformationen anwendet (44), um aus ihnen Fourier-Parameter zu extrahieren,
eine mit der digitalen Signalverarbeitungseinheit (16) verbundene abschließende Berechnungseinheit (18), welche ausgehend von den Fourier-Parametern die physikalischen Parameter (46) berechnet,
einen mit der Multiplexer- und Digitalisierungseinrichtung und der digitalen Signalbehandlungseinheit verbundenen Taktgeber (19), wobei der Taktgeber (19) Synchronisationssignale sendet,
**dadurch gekennzeichnet, dass** der Taktgeber (19) Mittel (24, 35) umfasst, welche ermöglichen, dass die Umschaltfrequenz (Fe) ein Vielfaches der Modulationsfrequenz (Fm) ist.

2. Ellipsometer nach Anspruch 1, **dadurch gekennzeichnet, dass** die Multiplexer- und Digitalisierungseinrichtung (7) Werte des digitalen Multiplexsignals an Samplingpunkten (53, 54, 55, 56) erzeugt und die Umschaltfrequenz (Fe) gleich der Modulationsfrequenz (Fm) multipliziert mit der Anzahl von Eingangskanälen (n) und mit der Anzahl (P) der Samplingpunkte pro Eingangskanal (6) und mit einer Modulationsperiode (Tm) ist.

3. Ellipsometer nach einem der Ansprüche 1 oder 2, **dadurch gekennzeichnet, dass** die Multiplexer- und Digitalisierungseinrichtung (7) einen mit den Eingangskanälen (6) verbundenen Multiplexer (12) und einen mit dem Multiplexer (12) verbundenen Digitalisierer (13) umfasst, wobei der Multiplexer (12) die gemessenen analogen Signale (40) sukzessive zwischen den Eingangskanälen (6) umschaltend in ein analoges Multiplexsignal multiplext und der Digitalisierer (13) das analoge Multiplexsignal in ein digitales Multiplexsignal umwandelt.

4. Ellipsometer nach einem der Ansprüche 1-3, **dadurch gekennzeichnet, dass** die elektronische Verarbeitungseinheit (4) eine mit dem Digitalisierer (13) und der digitalen Signalverarbeitungseinheit (16) verbundene Vorberechnungseinheit (14) umfasst, wobei die Vorberechnungseinheit (14) eine Vorfilterung des digitalen Multiplexsignals durch Integration über mehrere Modulationsperioden (Tm) realisiert.

5. Ellipsometer nach einem der vorhergehenden Ansprüche, **dadurch gekennzeichnet, dass** es Mittel zur zusätzlichen externen Anregung der Probe (1) umfasst, welche in der Lage sind, eine zusätzliche Modulation bei einer von der Modulationsfrequenz (Fm) der Polarisation verschiedenen Anregungsfrequenz zu erzeugen.

6. Ellipsometer nach einem der vorhergehenden Ansprüche, **dadurch gekennzeichnet, dass** es eine zu der elektronischen Behandlungseinheit (4) externe Uhr (24), welche die Modulationsfrequenz (Fm) erzeugt, und ein Frequenzmultiplikationssystem umfasst, wobei die externe Uhr (24) über das Frequenzmultiplikationssystem mit dem Taktgeber (19) verbunden ist und der Taktgeber (19) die Umschaltfrequenz (Fe) ausgehend von der Modulationsfrequenz (Fm) erzeugt.

7. Ellipsometer nach einem der Ansprüche 1-5, **dadurch gekennzeichnet, dass** die elektronische Verarbeitungseinheit (4) eine interne Uhr umfasst, welche die Modulationsfrequenz (Fm) und die Umschaltfrequenz (Fe) erzeugt.

8. Ellipsometer nach einem der vorhergehenden Ansprüche, **dadurch gekennzeichnet, dass** die elektronische Verarbeitungseinheit (4) mindestens eine Leiterplatte umfasst, wobei die Platte bevorzugt einen programmierbaren. Logikschaltkreis umfasst.

9. Ellipsometer nach einem der vorhergehenden Ansprüche, **dadurch gekennzeichnet, dass** es einen zwischen der Multiplexer- und Digitalisierungseinrichtung (7) und der digitalen Signalverarbeitungseinheit (16) angeordneten Vorbearbeitungsspeicher (15) umfasst, wobei der Vorbearbeitungsspeicher (15) das digitale Multiplexsignal für mindestens eine Modulationsperiode (Tm) speichert und es dann an die digitale Signalverarbeitungseinheit (16) zurückgibt.

10. Ellipsometer nach einem der vorhergehenden Ansprüche, **dadurch gekennzeichnet, dass** es ein Benutzerinterface (5) umfasst, welches die Verbindung der elektronischen Verarbeitungseinheit (4) mit einem Kommunikationsnetzwerk erlaubt.

11. Verfahren zur ellipsometrischen Messung von physikalischen Parametern (46) einer Probe (1) mit mehreren Detektoren, bei dem:
mindestens ein einfallender Lichtkegel (10) von mindestens einer Lichtquelle (20) emittiert wird,
der einfallende Lichtkegel (10) von mindestens einem Polarisator (23) polarisiert wird,
der einfallende Lichtkegel (10) von mindestens einem Polarisationsmodulator (24) bei einer Modulationsfrequenz (Fm) moduliert wird,
die Probe (1) mit dem einfallenden Lichtkegel (10) beleuchtet wird, wobei die Probe (1) einen zurückgeworfenen Lichtkegel (11) mit einem Polarisationszustand erzeugt,
der Polarisationszustand des zurückgeworfenen Lichtkegels (11) durch mindestens einen Analysator (30) analysiert wird,
ein Fluss von Teilen des zurückgeworfenen Lichtkegels (11) von mindestens zwei Fotodetektoren (37) gemessen wird und von den Fotodetektoren (37) ausgegebene gemessene analoge Signale (40) in Eingangskanälen (6) erzeugt werden,
auf die gemessenen analogen Signale (40) durch eine elektronische Verarbeitungseinheit (4) Operationen (41, 42, 44, 45)angewendet werden, um aus ihnen die physikalischen Parameter (46) abzuleiten, wobei die Operationen darin bestehen, dass
die gemessenen analogen Signale (40) durch eine Multiplexer- und Digitalisierungseinrichtung (7) zu einem digitalen Multiplexsignal gemultiplext (41) und konvertiert (42) werden, wobei die Multiplexer- und Digitalisierungseinrichtung (7) sukzessive zwischen den Eingangskanälen (6) bei einer Umschaltfrequenz (Fe) umschaltet,
das digitale Multiplexsignal in mit jeweiligen Eingangskanälen (6) korrespondierende Bestandteile aufgespaltet wird, und auf diese Bestandteile diskrete Fourier-Transformationen angewendet werden, womit Fourier-Parameter aus diesen extrahiert werden,
die physikalischen Parameter (46) ausgehend von den Fourier-Parametern berechnet werden (45),
**dadurch gekennzeichnet, dass** die Umschaltfrequenz (Fe) ein Vielfaches der Modulationsfrequenz (Fm) ist, derart, dass am Ausgang der Multiplexer- und Digitalisierungseinrichtung (7) die Bestandteile in dem digitalen Multiplexsignal verflochten sind.

12. Verfahren nach Anspruch 11, **dadurch gekennzeichnet, dass** die auf die Fotodetektoren (37) auftreffenden Teile des zurückgeworfenen Lichtkegels (11) durch eine spektrale Zerlegung nach Wellenlängen erzeugt werden.

13. Verfahren nach Anspruch 11, **dadurch gekennzeichnet, dass** die auf die Fotodetektoren (37) auftreffenden Teile des zurückgeworfenen Lichtkegels (11) durch eine räumliche Zerlegung erzeugt werden und von unterschiedlichen Bereichen der Probe (1) kommen.

14. Verfahren nach Anspruch 11, **dadurch gekennzeichnet, dass** die auf die Fotodetektoren (37) auftreffenden Teile des zurückgeworfenen Lichtkegels (11) durch eine Zerlegung in verschiedene Polarisationszustände erzeugt werden.

## Claims

1. Multi-detector ellipsometer comprising:
- at least one luminous source (20) emitting at least one incident luminous beam (10),
- at least one polarizer (23) polarizing said incident luminous beam (10),
- at least one polarization modulator (24) generating a polarization modulation at a modulation frequency (Fm) of the luminous beam (10) of polarized light,
- means of lighting a sample (1) by the incident luminous beam (10) producing a returned luminous beam (11) having a polarization state,
- at least one analyzer (30) analyzing the polarization state of the returned luminous beam (11),
- at least two photodetectors (37) measuring fluxes of parts of the returned luminous beam (11) and producing measured analog signals (40) in input channels (6),
- at least one electronic processing unit (4) linked to the input channels (6), calculating physical parameters (46) of the sample (1) from the measured analog signals (40), said electronic processing unit (4) comprising:
- at least one multiplexing and digitization unit (7), multiplexing (41 ) and converting (42) the measured analog signals (40) into a multiplexed digital signal, the multiplexing and digitization unit (7) switching successively on the input channels (6) at a switching frequency (Fe),
- a digital signal processing unit (16) linked to the multiplexing and digitization unit (7), dissociating the multiplexed digital signal into components corresponding respectively to the input channels (6) and applying (44) to said components discrete Fourier transforms in order to extract Fourier parameters,
- a final calculating unit (18) linked to the digital signal processing unit (16), calculating the physical parameters (46) from the Fourier parameters,
- a sequencer (19) linked to the multiplexing and digitization unit (7), and to the digital signal processing unit (16), said sequencer (19) sending synchronisation signals,
**characterized in that** said sequencer (19) comprises means (24, 35) making it possible to have that the switching frequency (Fe) is a multiple of the modulation frequency (Fm).

2. Ellipsometer according to claim 1, **characterized in that** the multiplexing and digitization unit (7) producing values of the multiplexed digital signal in sampling points (53, 54, 55, 56), the switching frequency (Fe) is equal to the modulation frequency (Fm) multiplied by the number of input channels (n) and by the number (P) of sampling points per input channel (6) and per modulation period (Tm).

3. Ellipsometer according to one of claim 1 or 2, **characterized in that** the multiplexing and digitization unit (7) comprises a multiplexer (12) linked to the input channels (6), and a digitizer (13) linked to the multiplexer (12), the multiplexer (12) multiplexing the measured analog signals (40) into a multiplexed analog signal by switching successively on the input channels (6), and the digitizer (13) converting the multiplexed analog signal into a multiplexed digital signal.

4. Ellipsometer according to any one of claims 1 to 3, **characterized in that** the electronic processing unit (4) comprises a previous calculating unit (14) linked to the digitizer (13) and to the digital signal processing unit (16), said previous calculating unit (14) carrying out a preliminary filtering of the multiplexed digital signal, by integration on several modulation periods (Tm).

5. Ellipsometer according to any one of the preceding claims, **characterized in that** it comprises means of supplementary external excitation of the sample (1) capable of generating a supplementary modulation at an excitation frequency distinct from the modulation frequency (Fm) of polarization.

6. Ellipsometer according to any one of. the preceding claims, **characterized in that** it comprises a clock (24) external to the electronic processing unit (4) generating the modulation frequency (Fm) and a frequency multiplication system, said external clock (24) being linked to the sequencer (19) by means of the frequency multiplication system, and the sequencer (19) producing the switching frequency (Fe) from the modulation frequency (Fm).

7. Ellipsometer according to any one of claims 1 to 5, **characterized in that** the electronic processing unit (4) comprises an internal clock generating the modulation frequencies (Fm) and the switching frequencies (Fe).

8. Ellipsometer according to any one of the preceding claims, **characterized in that** the electronic processing unit (4) comprises at least one printed circuit board, said board preferentially having at least one field programmable gate array.

9. Ellipsometer according to any one of the preceding claims, **characterized in that** it comprises a pre-processing memory (15) arranged between the multiplexing and digitization unit (7) and the digital signal processing unit (16), said pre-processing memory (15) storing the multiplexed digital signal for at least one modulation period (Tm) and then restoring it to the digital signal processing unit (16).

10. Ellipsometer according to any one of the preceding claims, **characterized in that** it comprises a user interface (5) allowing the connection of the electronic processing unit (4) to a communication network.

11. Multi-detector ellipsometric measuring process of the physical parameters (46) of a sample (1), in wherein:
- at least one incident luminous beam (10) is emitted by at least one luminous source (20),
- the incident luminous beam (10) is polarized by at least one polarizer (23),
- the incident luminous beam (10) is modulated at a modulation frequency (Fm) by at least one polarization modulator (24),
- the sample (1) is lit with the incident luminous beam ( 10), the sample (1) producing a returned luminous beam (11) having a polarization state,
- the polarization state of the returned luminous beam (11) is analyzed by at least one analyzer (30),
- the fluxes of parts of the returned luminous beam (11) are measured by at least two photodetectors (37), and the measured analog signals (40) from the photodetectors (37) are produced in input channels (6),
- operations (41, 42, 44, 45) are performed by an electronic processing unit (4) on the measured analog signals (40) in order to deduce the physical parameters (46), said operations consisting in:
- multiplexing (41) and converting (42) the measured analog signals (40) into a multiplexed digital signal, by means of a multiplexing and digitization unit (7), by switching the multiplexing and digitization unit (7) successively on the input channels (6) at a switching frequency (Fe),
- dissociating the multiplexed digital signal into components corresponding respectively to the input channels (6), and applying (44) to said components discrete Fourier transforms from which Fourier parameters are extracted,
- calculating (45) the physical parameters (46) from the Fourier parameters
**characterized in that** the switching frequency (Fe) is a multiple of the modulation frequency (Fm), so that on leaving the multiplexing and digitization unit (7), the components are interlaced in the multiplexed digital signal.

12. Process according to claim 11, **characterized in that** the parts of the returned luminous beam (11) reaching the photodetectors (37) are produced by a spectral decomposition in wavelength.

13. Process according to claim 11, **characterized in that** the parts of the returned luminous beam (11) reaching the photodetectors (37) are produced by a spatial decomposition and come from different zones of the sample (1).

14. Process according to claim 11, **characterized in that** the parts of the returned luminous beam (11) reaching the photodetectors (37) are produced by a decomposition into different states of polarization.
